# FASCICULE DE BREVET EUROPEEN

(11) **EP 2 807 051 B1**
(45) Date de publication et mention de la délivrance du brevet: **06.01.2016**
(21) Numéro de dépôt: 13701733.1
(22) Date de dépôt: 17.01.2013
(51) Int. Cl.: B60N 2/68, B60N 2/70

(54) **DISPOSITIF FORMANT UNE OSSATURE D'ASSISE POUR SIEGE AUTOMOBILE, DE POIDS ALLEGEE, PROCEDE DE FABRICATION DE CETTE OSSATURE AVEC DIFFERENTES HAUTEURS D'ASSISE**
VORRICHTUNG MIT REDUZIERTEM GEWICHT ZUR BILDUNG DES SITZTEILRAHMENS EINES KRAFTFAHRZEUGSITZES SOWIE VERFAHREN ZUR HERSTELLUNG DES RAHMENS MIT UNTERSCHIEDLICHEN SITZTEILHÖHEN
REDUCED-WEIGHT DEVICE FORMING THE SEAT PORTION FRAME OF A MOTOR VEHICLE SEAT, AND METHOD FOR PRODUCING SAID FRAME WITH DIFFERENT SEAT-PORTION HEIGHTS

(30) Priorité: 23.01.2012 FR 1250612
(43) Date de publication de la demande: 03.12.2014
(73) Titulaire: Peugeot Citroën Automobiles SA, 78140 Vélizy Villacoublay (FR); FAURECIA Sièges d'Automobile, 92000 Nanterre (FR)
(72) Inventeur: BOUYAUD, Muriel, 78114 Magny Les Hameaux (FR); PINTO TEIXEIRA, Frédéric, 91160 Ballainvilliers (FR); CHABERT, Laurent, 91590 Cerny (FR); DUHAMEL, Philippe, 91169 Longjumeau (FR)
(86) Numéro de dépôt international: PCT/EP2013/050805
(87) Numéro de publication internationale: WO 2013/110537

(56) Documents cités:
- WO-A1-03/016091
- WO-A1-2009/142649
- DE-A1- 19 728 052
- DE-A1-102009 040 901
- DE-U1-202005 020 421
- FR-A1- 2 482 255
- FR-A1- 2 534 792
- US-A- 4 577 907

## Description

La présente invention revendique la priorité de la demande française 1250612 déposée le 23 janvier 2012.

La présente invention concerne une ossature d'assise pour un siège tel qu'un siège de véhicule automobile, ainsi qu'un procédé de fabrication de cette ossature avec différentes hauteurs.

Parmi les sièges de véhicule automobile existants, ceux pourvus de moyens de réglage en hauteur de l'assise tels que des bielles de rehausse, sont généralement destinés aux véhicules haut de gamme car plus coûteux, alors que les sièges fixes c'est-à-dire dépourvus de toute fonction de rehausse, et de moindre coût, équipent les véhicules d'entrée de gamme.

Mais actuellement, une ossature de siège fixe, pour des raisons de coût, reprend l'ensemble des éléments constitutifs d'une ossature de siège avec fonction rehausse à l'exception des bielles de rehausse, mais son poids, du fait des éléments métalliques qu'elle contient pour coopérer avec ces bielles de rehausse malgré l'absence de cette fonction, reste relativement important. En outre, il est nécessaire d'utiliser des pièces supplémentaires dites « flasques pattes » qui viennent condamner les points pivot situés sur les glissières de ces assises. Cette fabrication à moindre coût ne permet pas d'optimiser la masse du siège fixe, bien au contraire.

Pourtant, la diminution de la masse totale du siège et celle des nombreux éléments présents au sein d'un véhicule automobile est le prochain objectif à atteindre pour encore diminuer les émissions polluantes du véhicule et devient un enjeu majeur à la veille d'une reconsidération des normes de rejet en vigueur.

En outre, si un siège avec une assise et un dossier en matière thermoplastique moulé par injection et donc de relativement faible poids, est connu du document FR 79 25304, celui-ci comporte des parties où la matière plastique s'accumule sous forme de blocs lors de l'injection, susceptibles de renfermer des bulles d'air et n'étant ainsi pas d'une fabrication fiable.

L'invention vise à proposer une solution à ce problème.

A cet effet, l'invention concerne une ossature pour une assise de siège tel qu'un siège de véhicule automobile, comprenant une partie horizontale de support d'une charge, deux parties de retenue latérale s'étendant sensiblement perpendiculairement à la partie horizontale de support, constituées d'une matière thermoplastique moulée par injection.

Selon l'invention, l'ossature comprend une structure creuse de parois solidaires les unes des autres comprenant une paroi supérieure formant la partie horizontale de support, et deux parois latérales s'étendant de part et d'autre et sensiblement perpendiculairement à la paroi supérieure pour former les parties de retenue latérale, et la structure creuse est formée par deux formes creuses pourvues chacune d'un fond, d'une paroi latérale s'étendant à partir du fond et prolongée perpendiculairement par un rebord définissant une ouverture, les fonds des deux formes en creux étant en vis-à-vis, la portion supérieure des deux parois latérales des deux formes en creux définissant la partie de support du dispositif, les parties supérieures des deux rebords latéraux des formes en creux définissant les deux parties de retenue latérale du dispositif.

L'invention peut présenter l'une ou l'autre des caractéristiques additionnelles suivantes :
- les portions supérieures des deux parois latérales des formes creuses, et constituant la partie de support du dispositif sont planes et définissent une faible hauteur d'assise.
- le rebord latéral de chaque forme creuse définit vis à vis de la partie de support une hauteur inférieure à 3 cm.
- les portions supérieures des deux parois latérales des formes creuses formant la partie de support portent des nervures longitudinales sensiblement verticales définissant une assise de hauteur élevée
- le rebord de chaque forme creuse définit vis à vis de la partie de support une hauteur supérieure à 6 cm.
- la paroi latérale de chaque forme creuse s'évase dans la direction opposée à son fond
- les deux fonds des deux caissons coïncident l'un avec l'autre et définissent une nervure interne de rigidification pour le dispositif
- les parties de retenue latérale comprennent à leurs extrémités arrière des moyens de fixation à un dossier de siège.

L'invention concerne également un moule à injection de fabrication d'une ossature d'une assise d'un siège, comprenant une cale courte pourvue d'une paroi plane de moulage d'une partie de support de l'ossature et une écaille courte moulant une paroi latérale de retenue de l'ossature, avec une hauteur prédéterminée.

Selon l'invention, la cale et l'écaille courtes sont amovibles et remplaçables respectivement par une cale pourvue de creux et de bosses longitudinaux permettant le moulage de nervures sur la partie de support de l'ossature, et par une écaille moulant une paroi latérale de retenue de l'ossature avec une hauteur supérieure à la hauteur prédéterminée.

L'invention sera mieux comprise, et d'autres buts, caractéristiques, détails et avantages de celle-ci apparaîtront plus clairement à la lumière de la description explicative qui va suivre, faite en référence aux figures suivantes parmi lesquelles :

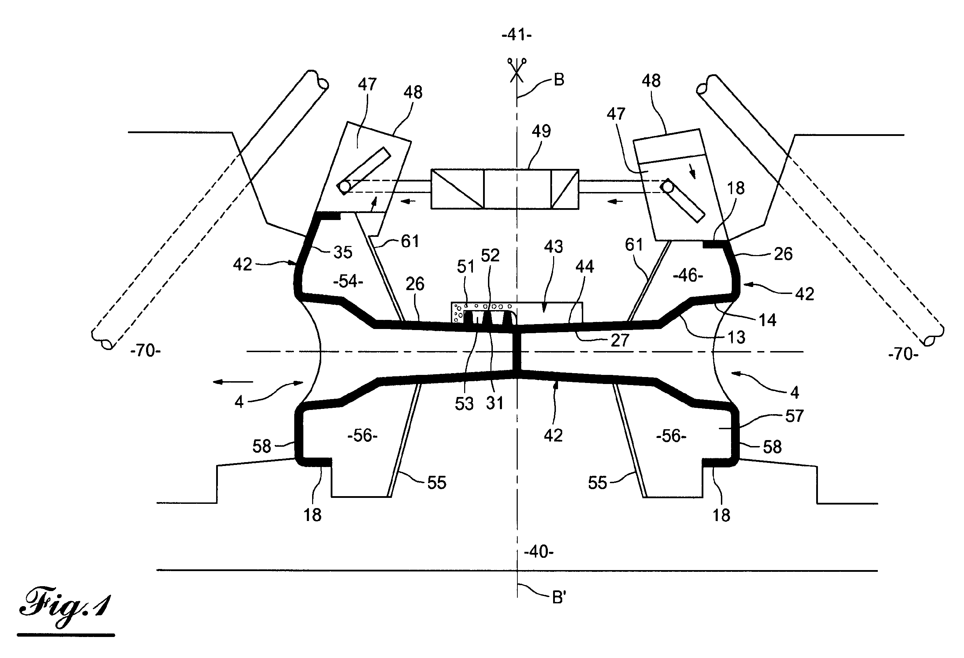

- la figure 1 représente par une vue schématique en coupe transversale, le moule de fabrication d'une assise de siège selon l'invention avec, du côté droit de la ligne discontinue, les éléments amovibles et mobiles du moule dans leur configuration leur permettant la fabrication de l'assise dans sa version basse et du côté gauche de cette ligne, ces mêmes éléments amovibles ou mobiles dans une configuration leur permettant la fabrication de l'assise dans sa version haute,

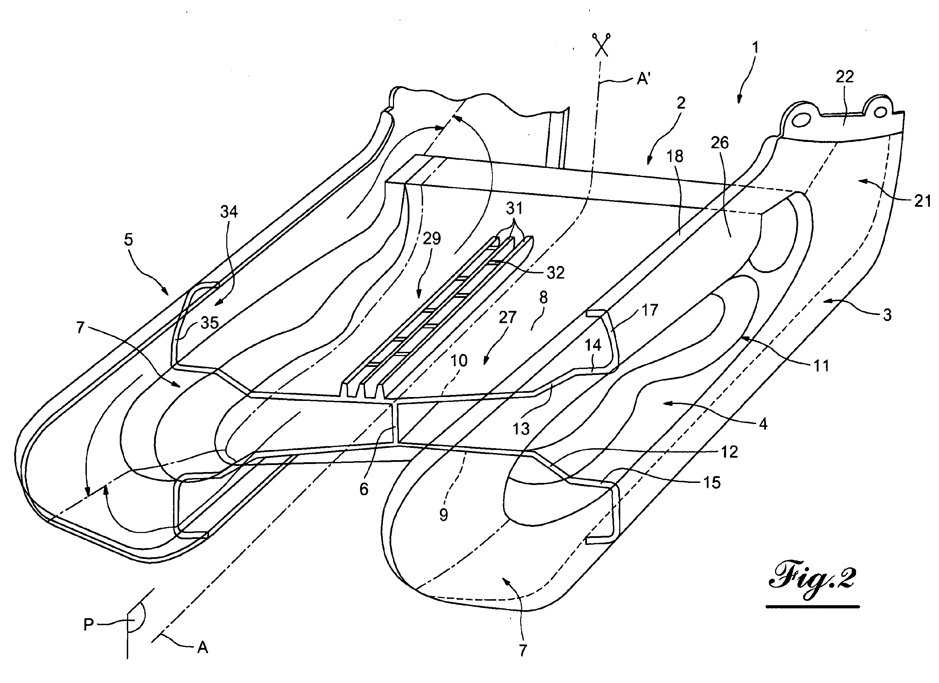

- la figure 2 représente en perspective une assise de siège selon l'invention et selon les deux versions haute et basse d'assise et de paroi de retenue latérale possibles, la partie de l'assise disposée à droite de la ligne discontinue étant en configuration basse avec une partie centrale plane et un rebord latéral court, la partie de l'assise disposée à gauche de cette ligne discontinue étant en configuration haute avec des nervures dans la partie centrale et un rebord latéral long.

L'invention telle qu'illustrée sur les figures annexées concerne une assise de siège de véhicule automobile dit fixe c'est-à-dire dépourvu de dispositif de réglage en hauteur, et dont la structure permet l'obtention d'un gain significatif de masse vis-à-vis des sièges de ce type existant, tout en permettant la définition de deux hauteurs d'assise.

Tel que l'illustre la figure 2, qui représente dans sa partie gauche l'ossature d'assise dans sa version haute et dans sa partie droite cette ossature dans sa version basse, l'assise 1 selon l'invention comprend une partie centrale 2 servant de support à une charge ou un individu et s'étendant selon un plan sensiblement horizontal, ainsi que deux parties latérales 3 permettant la retenue latérale de la charge ou de l'individu et étant dans l'exemple illustré symétriques l'une de l'autre par rapport à un plan vertical passant par l'axe de symétrie AA' coïncidant avec l'axe longitudinal du véhicule.

Cette assise est définie par l'association de deux parties creuses 4 en forme d'entonnoir allongé suivant l'axe AA', dont les portions resserrées sont en vis-à-vis et partagent un fond commun 6 qui forme une nervure interne de rigidification, et dont les ouvertures 4 pointent vers l'extérieur.

On peut considérer que cette forme en creux 4 constitue depuis le fond 6 une succession de tubes concentriques aplatis dans la direction de l'axe AA' d'ouvertures de plus en plus larges et en enfilade les uns des autres. Cette structure particulière dite "structure à canaux", confère à l'assise une rigidité convenant à sa fonction de support.

Chaque forme creuse définit plus précisément en section transversale, à proximité du fond, une portion resserrée formée par deux parois 9, 10 s'étendant depuis la nervure interne 6 divergeant légèrement en direction de l'ouverture de la forme en creux 4, et une portion plus évasée définie par deux parois 12, 13 divergeant l'une de l'autre d'un angle bien supérieur à l'angle de divergence des parois 9 et 10 de la portion resserrée, cette portion évasée ou conique étant prolongée par une portion à paroi sensiblement horizontale 14, 15 définissant l'ouverture de la forme en creux.

Les portions supérieures 10 des parois latérales 7 des deux formes en creux 4 constituent la partie de support de l'assise.

Un rebord latéral 17 sensiblement perpendiculaire à la dernière paroi horizontale 14 et qui s'étend donc sensiblement verticalement, assure la fonction de maintien latéral de la charge ou de l'individu et se termine par une bordure 18 de finition sensiblement horizontale.

Le rebord latéral 17 qui entoure l'ouverture 11 de forme en creux 4 comprend une protubérance 21 en partie arrière qui intègre un insert métallique 22 servant à la fixation d'un dossier de siège non représenté.

Les éléments qui viennent d'être décrits sont communs aux deux versions haute et basse de l'assise selon l'invention.

Mais la forme en creux de l'assise version basse illustrée sur la partie droite de la figure 2, présente la particularité de définir une portion supérieure 27 de paroi d'assise relativement plane fixant une hauteur d'assise basse, ainsi qu'une portion supérieure 26 de rebord 17 de relativement faible hauteur, par exemple de l'ordre de 3 cm. Le flasque latéral creux ainsi formé présente une hauteur d'environ 13,5 cm.

Et, comme visible sur la partie gauche de la figure 2, dans la version haute, la portion supérieure 29 de la paroi d'assise n'est pas plane mais pourvue de nervures longitudinales et parallèles 31 reliées deux à deux par des ponts 32 transversaux à ces nervures, et qui viennent rehausser la partie de support qui est alors définie par le bord libre des nervures augmentant ainsi la hauteur d'assise de quelques centimètres par exemple un à deux centimètres par rapport à la hauteur d'assise basse 27 de son homologue dans la version basse de l'assise. En outre, dans cette version haute, la portion supérieure 34 du rebord latéral 17 présente une hauteur supérieure à celle de son homologue 17 de la version basse d'environ 4 ou 6 cm par exemple. Le flasque latéral creux ainsi formé présente une hauteur d'environ 16,5 cm

La version basse peut être fixée sur le plancher d'un véhicule automobile au moyen d'une zone de raccordement coopérant avec une équerre de jonction avec des glissières. Ces équerres présentent la particularité de comporter des trous verticalement espacés les uns des autres et permettant de faire varier la hauteur de l'assise.

Mais lorsqu'une hauteur d'assise plus importante est requise, on utilise l'assise version haute à nervures et rebords longs.

Dans les deux versions haute et basse représentées et décrites ci-dessus, et en dehors de l'insert métallique 22 de fixation du dossier, l'assise selon l'invention est constituée d'un matériau thermoplastique injectable au sein d'un moule à injection, chargé de fibres courtes telle que de la fibre de verre à hauteur par exemple de 30%, le matériau thermoplastique pouvant être du polyamide 6 (PA6), ce qui lui confère une légèreté incomparable par rapport aux assises de siège de type connu.

Ainsi, la version haute comme la version basse de l'assise selon l'invention, peuvent être obtenues au sein d'un même moule à injection.

En effet, le moule à injection tel que représenté sur la figure 1 comprend de façon classique un poinçon fixe 40 et une matrice mobile 41 pourvue des conduits d'injection de la matière plastique en fusion, le poinçon 40 et la matrice 41 définissant dans la position de fermeture illustrée sur cette figure 1, une cavité 42 de la forme de l'assise à réaliser et permettant dans une position d'ouverture non représentée mais discutée plus en détails ultérieurement, la libération de cette assise.

Conformément à la partie droite de cette figure relativement à l'axe BB', et qui illustre les éléments du moule permettant la fabrication de l'assise dans sa version basse, une cale 42 solidaire de la matrice 41 par exemple par vissage, présente une forme sensiblement parallélépipédique dont la paroi inférieure plane 44 sert de moulage pour la paroi d'assise plane 27 de l'assise version basse.

Pour le moulage du rebord court 26, la matrice comprend une écaille courte 46 dont la paroi inférieure et la paroi latérale droite permettent le moulage de la portion supérieure de la partie évasée 13, de la paroi droite 14, du rebord court 26 et de la bordure 18, en coopérant avec un pavé d'acier 47 monté au sein d'un évidement 48 réalisé dans la matrice, mobile en translation entre une position basse de réalisation du rebord court en combinaison avec la cale basse 46, et une position haute qui sera explicitée ci-après.

Lorsque la cale 43 de fabrication de la paroi d'assise plane 27, l'écaille courte 46 sont sélectionnées et que le pavé d'acier 47 occupe la position basse, le moule dans sa position de fermeture est parfaitement étanche et définit par sa cavité interne la forme de l'assise version basse à réaliser.

Au contraire, comme visible sur la partie gauche de la figure 1, pour réaliser l'assise dans sa version haute, on utilise une cale à relief 51 dont la paroi inférieure comporte des creux 52 ainsi que des bosses 53 s'étendant longitudinalement et permettant le moulage des nervures 31 et des rainures de la paroi d'assise à nervures 29 de la version haute. En outre, une écaille de formation du rebord long 35 dite écaille longue 54 est sélectionnée pour coopérer avec le pavé d'acier 47 dans sa deuxième position haute dans laquelle il est repoussé à l'extrémité supérieure de l'évidement 48.

Cette écaille longue 54 présente une forme générale correspondant à celle de l'écaille courte 46 mais une hauteur supérieure.

Lorsque la cale à nervures 51, l'écaille longue 54 sont sélectionnées et que le pavé d'acier 47 occupe la position haute, le moule dans sa position de fermeture est parfaitement étanche et définit par sa cavité interne la forme de l'assise version haute à réaliser.

La distance parcourue par le pavé d'acier 47 entre la position haute de gauche et la position basse de droite définit la différence de hauteur entre le rebord long 35 et du rebord court 26.

En outre, le mouvement du pavé d'acier 47 entre les deux positions est assuré au moyen d'un vérin hydraulique bistable qui est apte à le maintenir sélectivement dans l'une de ces deux positions.

Compte tenu de la forme particulière de la pièce avec ces deux formes creuses 4 en forme générale d'entonnoir joint l'un à l'autre par leurs parties resserrées, et dont les parties évasées opposées comprennent des rebords verticaux 26 ou 35 à bordure horizontale 18, il est nécessaire de définir au sein du moule des éléments rendant possible et facilitant l'éjection de cette assise une fois le matériau composite la constituant durcie.

A cet effet, la matrice comprend deux parois latérales 61 sur lesquelles les écailles courte 46 ou longue 54 selon la version d'assise à réaliser, prennent appui par leur paroi opposée à la cavité de moulage, et qui convergent l'une vers l'autre en direction du poinçon 40. Lorsque le moule est ouvert, et que la matrice 41 est éloignée du poinçon dans la direction de l'axe BB', les écailles 46, 54 peuvent se rapprocher horizontalement l'une vers l'autre en glissant le long du plan défini par la paroi inclinée de matrice correspondante 61 de façon à dégager les portions supérieures du rebord 26 ou 35 et de la bordure 18 pour autoriser la libération de la pièce.

Dans le même temps, le poinçon 40 qui présente en section transversale deux parois opposées inclinées 55 convergeant l'une vers l'autre en direction de la matrice 41 et qui comprend deux cales mobiles latérales 56 servant de moulage à la portion inférieure évasée de la forme en creux, autorise un glissement des deux cales mobiles 56 le long des pentes 55 et ainsi leur rapprochement l'une de l'autre, ce qui permet de dégager la partie proéminente 57, la portion inférieure 58 du rebord latéral inférieur 58 et la bordure correspondante 18 de l'assise de façon à en autoriser l'éjection.

On décrit dans ce qui suit la fabrication d'une assise en version haute, puis celle d'une assise en version basse au sein du moule ci-dessus décrit, sachant que ce moule est tourné de 90° par rapport à son orientation sur la figure 1 avant l'injection.

### Fonctionnement du moule pour la réalisation d'une assise version haute (coté gauche des figures 1 et 2) :

a on place des inserts métalliques fins destinés à former une zone de raccordement avec le dossier du siège, à l'intérieur du moule
• les pavés mobiles 47 sont déplacés à leur position haute grâce au vérin bistable 49 qui les maintient dans cette position,
• les écailles longues 54 et les cales à nervures 51 ont préalablement été sélectionnées par un opérateur ou un programme de contrôle du moule,
• le moule est fermé par rapprochement de ses tiroirs latéraux 70 qui présentent une forme proéminente de forme complémentaire de la forme en creux en entonnoir de l'assise, la cavité étanche que forment sa matrice 41, son poinçon 40, les pavés 47, les cales 51, les écailles 54, et les tiroirs 70 présente la forme de l'assise dans sa version haute,
• on injecte le matériau composite en fusion, pour surmouler cette matière sur les inserts métalliques
• une fois l'injection terminée et la pièce refroidie, la matrice est éloignée du poinçon, les tiroirs 70 en lien mécanique avec la matrice 41 éloignés l'un de l'autre, et les écailles 54 sont également reculés en simultané en glissant le long des pentes 61 en se rapprochant l'une de l'autre alors que la pièce reste bloquée sur le poinçon 40 par les cales inférieures 56,
• la pièce est éjectée par les éjecteurs poinçon, et les cales inférieures 56 sont simultanément reculées en glissant le long des pentes 55 et en se rapprochant l'une de l'autre,
• la pièce en version haute est enfin démoulée.

### Fonctionnement du moule pour la réalisation d'une assise version basse (coté droit des figures 1 et 2) :

- on place des inserts métalliques fins destinés à former une zone de raccordement avec le dossier du siège, à l'intérieur du moule
- les pavés mobiles 47 sont déplacés à leur position basse grâce au vérin bistable. 49 qui les maintient dans cette position, par un programme de contrôle du moule,
- les écailles courtes 46 et les cales parallélépipédiques 43 qui forment un leurre puisque remplacent les cales à nervures 51 mais sans contenir aucune de ces nervures afin de réduire la hauteur de la zone centrale, ont préalablement été sélectionnées par un opérateur ou par un programme de contrôle du moule,
- le moule est fermé par rapprochement de ses tiroirs latéraux 70, la cavité étanche que forment sa matrice 41, son poinçon 40, les pavés 47, les cales 43, les écailles courtes 46, et les tiroirs 70 présente la forme de l'assise dans sa version basse,
- on injecte le matériau composite en fusion, pour surmouler cette matière sur les inserts métalliques
- une fois l'injection terminée et la pièce refroidie, la matrice est éloignée du poinçon, les tiroirs 70 en lien mécanique avec la matrice 41 éloignés l'un de l'autre, et les écailles courtes 46 sont également reculés en simultané en glissant le long des pentes 61 de la matrice 41 en se rapprochant l'une de l'autre alors que la pièce reste bloquée sur le poinçon 40 par les cales inférieures 56,
- la pièce est éjectée par les éjecteurs poinçon, et les cales inférieures 56 sont simultanément reculées en glissant le long des pentes 55 et en se rapprochant l'une de l'autre,
- la pièce en version basse est enfin démoulée.

L'invention telle que décrite ci-dessus présente différents avantages parmi lesquels :
- un gain de matière important vis-à-vis des assises de siège fixe existantes qui contenaient tous les éléments structurels des assises de siège rehaussable et donc d'un poids conséquent,
- de se dégager des technologies tout métal en empruntant un matériau composite comme base principale,
- ce gain de matière étant rendu possible grâce à la structure creuse de l'assise, dans sa version basse comme dans version longue avec nervures et qui répond en outre aux règles de plasturgies qui recommandent d'éviter toute accumulation de matière plastique en fusion sur une épaisseur trop importante,
- D'autre part, sa technologie principale basée sur l'injection, permet d'obtenir des faces latérales structurelles mais également esthétiques sans nécessiter l'ajout de carter ajouté, ce qui permet un gain de masse supplémentaire, et diminue le temps de montage.

## Revendications

1. Ossature pour une assise de siège tel qu'un siège de véhicule automobile, comprenant une partie horizontale de support d'une charge, deux parties de retenue latérale s'étendant sensiblement perpendiculairement à la partie horizontale de support, constituées d'une matière thermoplastique moulée par injection, une structure creuse (4) de parois solidaires les unes des autres définissant une paroi supérieure (10) formant la partie horizontale de support, et deux parois latérales (17, 35) s'étendant de part et d'autre et sensiblement perpendiculairement à la paroi supérieure pour former les parties de retenue latérale, et la structure creuse est formée par deux formes creuses (4) pourvues chacune d'un fond (6), d'une paroi latérale (7) s'étendant à partir du fond (6) et prolongée perpendiculairement par un rebord (17) définissant une ouverture, les fonds (6) des deux formes en creux (4) étant en vis-à-vis l'un de l'autre, la portion supérieure (10) des deux parois latérales (7) des deux formes en creux (4) définissant la partie de support du dispositif, les parties supérieures (26, 34) des deux rebords latéraux (17) des formes en creux (4) définissant les deux parties de retenue latérale du dispositif.

2. Ossature selon la revendication 1, **caractérisé en ce que** les portions supérieures (27, 29) des deux parois latérales (7) des formes creuses (4), et constituant la partie de support du dispositif, sont planes et définissent une faible hauteur d'assise.

3. Ossature selon la revendication 2, **caractérisé en ce que** le rebord latéral (26, 34) de chaque forme creuse définit vis à vis de la partie de support une hauteur inférieure à 3 cm.

4. Ossature selon la revendication 1, **caractérisé en ce que** les portions supérieures (27, 29) des deux parois latérales (7) des formes creuses (4) formant la partie de support (10) portent des nervures longitudinales (31) sensiblement verticales définissant une assise de hauteur élevée.

5. Ossature selon la revendication 4, **caractérisé en ce que** le rebord de chaque forme creuse définit vis à vis de la partie de support (10) une hauteur supérieure à 6 cm.

6. Ossature selon l'une des revendications 1 à 5, **caractérisé en ce que** la paroi latérale (7) de chaque forme creuse s'évase dans la direction opposée à son fond (6).

7. Ossature selon la revendication 6, **caractérisé en ce que** les deux fonds des deux formes creuses coïncident l'un avec l'autre et définissent une nervure interne de rigidification (6) pour le dispositif.

8. Ossature selon la revendication 1, **caractérisé en ce que** les parties de retenue latérale comprennent à leurs extrémités arrière des moyens de fixation (22) à un dossier de siège.

9. Moule à injection de fabrication d'une ossature selon la revendication 1 d'une assise d'un siège, comprenant une cale courte (43) pourvue d'une paroi plane (44) de moulage d'une partie de support basse (27) de l'ossature, et une écaille courte (46) moulant une paroi latérale de retenue (26) de l'ossature avec une hauteur prédéterminée, la cale (43) et l'écaille (46) courtes étant amovibles et remplaçables respectivement par une cale à creux et bosses longitudinaux (51) permettant le moulage de nervures (52) sur la partie de support (10) de l'ossature, et par une écaille longue (54) moulant une paroi latérale de retenue de l'ossature avec une hauteur supérieure à la hauteur prédéterminée.

## Patentansprüche

1. Rahmengestell für eine Sitzfläche eines Sitzes in der Art eines Kraftfahrzeugsitzes, einen horizontalen Abschnitt zum Tragen einer Last umfassend, zwei Abschnitte für den seitlichen Halt, die sich in etwa senkrecht zum horizontalen Trageabschnitt erstrecken, und aus einem spritzgeformten thermoplastischen Material gebildet werden, eine Hohlstruktur (4) mit zwei fest miteinander verbundenen Wänden, die eine obere Wand (10) definieren, die den horizontalen Trageabschnitt bildet, und zwei Seitenwände (17, 35), die sich beiderseits und in etwa senkrecht zur oberen Wand erstrecken, um die Abschnitte für den seitlichen Halt zu bilden, wobei die Hohlstruktur durch zwei hohle Formen (4) gebildet wird, die jeweils mit einem Boden (6) und einer Seitenwand (7) versehen sind, die sich vom Boden (6) ausgehend erstreckt, und senkrecht durch einen Rand (17) weitergeführt wird, der eine Öffnung definiert, wobei die Böden (6) der beiden hohlen Formen (4) einander gegenüber liegen, und der obere Abschnitt (10) der beiden Seitenwände (7) der beiden hohlen Formen (4) den Trageabschnitt der Vorrichtung definieren, wobei die oberen Abschnitte (26, 34) der beiden seitlichen Ränder (17) der hohlen Formen (4) die beiden Abschnitte für den seitlichen Halt der Vorrichtung definieren.

2. Rahmengestell nach Anspruch 1, **dadurch gekennzeichnet, dass** die oberen Teile (27, 29) der beiden Seitenwände (7) der hohlen Formen (4), und die den Trageabschnitt der Vorrichtung definieren, eben sind, und eine geringe Sitzflächenhöhe definieren.

3. Rahmengestell nach Anspruch 2, **dadurch gekennzeichnet, dass** der seitliche Rand (26, 34) einer jeden hohlen Form gegenüber dem Trageabschnitt eine Höhe von unter 3 cm definiert.

4. Rahmengestell nach Anspruch 1, **dadurch gekennzeichnet, dass** die oberen Teile (27, 29) der beiden Seitenwände (7) der hohlen Formen (4), die den Trageabschnitt (10) definieren, längliche in etwa vertikale Rippen (31) aufweisen, die eine Sitzfläche mit einer großen Höhe definieren.

5. Rahmengestell nach Anspruch 4, **dadurch gekennzeichnet, dass** der Rand einer jeden hohlen Form gegenüber dem Trageabschnitt (10) eine Höhe von über 6 cm definiert.

6. Rahmengestell nach einem der Ansprüche 1 bis 5, **dadurch gekennzeichnet, dass** sich die Seitenwand (7) einer jeden hohlen Form in die zu ihrem Boden (6) entgegengesetzte Richtung erweitert.

7. Rahmengestell nach Anspruch 6, **dadurch gekennzeichnet, dass** die beiden Böden der beiden hohlen Formen miteinander übereinstimmen und eine innere Versteifungsrippe (6) für die Vorrichtung definieren.

8. Rahmengestell nach Anspruch 1, **dadurch gekennzeichnet, dass** die Abschnitte für den seitlichen Halt an ihren hinteren Enden Mittel zum Befestigen (22) an einer Sitzlehne umfassen.

9. Spritzgussform zur Herstellung eines Rahmengestells nach Anspruch 1 für eine Sitzfläche eines Sitzes, eine kurze Abstützung (43) umfassend, die mit einer ebenen Wand (44) zum Formen eines unteren Trageabschnitts (27) des Rahmengestells versehen ist, und eine kurze Schildplatte (46), die eine Seitenwand zum Halten (26) des Rahmengestells mit einer vorbestimmten Höhe ausformt, wobei die kurze Abstützung (43) und die kurze Schildplatte (46) abnehmbar sind, und jeweils durch eine Abstützung mit länglichen Ausnehmungen und Buckeln (51) ersetzt werden können, die das Formen von Rippen (52) auf dem Trageabschnitt (10) des Rahmengestells ermöglichen, sowie durch eine lange Schildplatte (54), die eine Seitenwand zum Halten des Rahmengestells mit einer Höhe ausformt, die größer ist, als die vorbestimmte Höhe.

## Claims

1. Framework for a seat squab such as for a motor vehicle seat, comprising a horizontal part supporting a load, two lateral holding parts extending substantially perpendicular to the horizontal part of the support, consisting of an injection-moulded thermoplastic material, a hollow structure (4) of walls secured to each other defining a top wall (10) forming the horizontal supporting part and two lateral walls (17, 35) extending on either side and substantially perpendicular to the top wall in order to form the lateral holding parts, and the hollow structure being formed by two hollow forms (4) each provided with a bottom (6), a lateral wall (7) extending from the bottom (6) and extended perpendicularly by an edge (17) defining an opening, the bottoms (6) of the two hollow forms (4) being facing each other, the top portion (10) of the two lateral walls (7) of the two hollow forms (4) defining the supporting part of the device, the top parts (26, 34) of the two lateral edges (17) of the hollow forms (4) defining the two lateral holding parts of the device.

2. Framework according to claim 1, **characterised in that** the top portions (27, 29) of the two lateral walls (7) of the hollow forms (4), constituting the supporting part of the device, are flat and define a low squab height

3. Framework according to claim 2, **characterised in that** the lateral edge (26, 34) of each hollow form defines, vis-à-vis the supporting part, a height of less than 3 cm.

4. Framework according to claim 1, **characterised in that** the top portions (27, 29) of the two lateral walls (7) of the hollow forms (4) forming the supporting part (10) carry substantially vertical longitudinal ribs (31) defining a high squab.

5. Framework according to claim 4, **characterised in that** the edge of each hollow form defines, vis-à-vis the supporting part (10), a height greater than 6 cm.

6. Framework according to one of claims 1 to 5, **characterised in that** the lateral wall (7) of each hollow form splays in the direction opposite to its bottom (6).

7. Framework according to claim 6, **characterised in that** the two bottoms of the two hollow forms coincide with each other and define an internal stiffening rib (6) for the device.

8. Framework according to claim 1, **characterised in that** the lateral holding parts comprise, at their rear ends, means (22) for fixing to a seat backrest.

9. Injection mould for manufacturing a framework according to claim 1 of a seat squab, comprising a short bolster (43) provided with a flat wall (44) for moulding a low supporting part (27) of the framework, and a short shell (46) moulding a lateral holding wall (26) of the framework with a predetermined height, the short bolster (43) and shell (46) being removable and replaceable respectively by a bolster with longitudinal hollows and protrusions (51) enabling ribs (52) to be moulded on the supporting part (10) of the framework, and by a long shell (54) moulding a lateral holding wall of the framework with a height greater than the predetermined height.
